Europäisches Patentamt

(19) European Patent Office

Office européen des brevets

(11) EP 0 814 423 B1

(12) EUROPEAN PATENT SPECIFICATION

(45) Date of publication and mention of the grant of the patent:
25.07.2001 Bulletin 2001/30

(51) Int Cl.$^7$: G06K 11/16

(21) Application number: 97202375.8

(22) Date of filing: 14.08.1990

(54) **Methods and apparatus for data entry**

Verfahren und Vorrichtung zur Dateneingabe

Méthodes et dispositif pour l'introduction de données

(84) Designated Contracting States:
AT BE CH DE DK ES FR GB IT LI LU NL SE

(30) Priority: 16.08.1989 US 394566

(43) Date of publication of application:
29.12.1997 Bulletin 1997/52

(62) Document number(s) of the earlier application(s) in accordance with Art. 76 EPC:
90913682.2 / 0 486 617

(73) Proprietor: GERPHEIDE, George E.
Salt Lake City, UT 84109 (US)

(72) Inventor: GERPHEIDE, George E.
Salt Lake City, UT 84109 (US)

(74) Representative: Gillam, Francis Cyril et al
SANDERSON & CO.
European Patent Attorneys
34, East Stockwell Street
Colchester Essex CO1 1ST (GB)

(56) References cited:
EP-A- 0 299 204          US-A- 4 495 485
US-A- 4 639 720

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Field of the Invention

This invention relates generally to methods and apparatus for data input. More specifically, this invention relates to touch sensitive input devices for data input to computers and other instruments.

Background of the Invention

Input devices for computers are well known in the art. There are several types of input devices, such as the familiar "mouse", which have been utilized and are generally useful in providing "user friendly" computer systems for both technical and non-technical applications. The popularity which these devices have achieved in the art can be given large credit for fostering the explosive growth of the personal computer industry since they provide a simple means for users to input data to computers for users.,

Currently, about 95% of all input devices or "pointing devices" are mice. A mouse generally requires a free-rolling surface on which it can interface. Depending upon the particular mouse which is used, the device couples to the free-rolling surface and translates movement across the surface as an input to a computer. Thus, the mouse is unsuitable for any input application which cannot provide space for a rolling surface. The current and growing popularity of "laptop" computers thus has created a significant problem for mouse type technologies which require a rolling surface. Laptops are generally used in small confined areas such as, for example, airplanes, where there is insufficient room for a rolling surface. Therefore, a long-felt need in the art exists for non-mouse pointing solutions for computers and other instruments.

A further long-felt need in the art exists for input and pointing devices which are simple to use and which can be easily integrated with current computers. This long-felt need has not been solved by previous mechanical ball or shaft rolling technologies, such as, for example, track balls. Furthermore, new pointing devices should be reliable and rugged, with the ability to be transported to a variety of locations. Current track ball devices do not satisfy these long-felt needs and are also quite cumbersome since they require practiced dexterity by the user as he interacts with the device.

Other types of pointing or input devices have been employed in the art. U.S. Patent No. 3,886,311, Rodgers et al., discloses a writing pen for detecting time varying electrostatic field components. The writing pen disclosed in Rodgers et al. is used in conjunction with a writing tablet which generates an electrostatic field. The Rodgers et al. patent discloses an X-Y grid having a writing surface overlaying the grid and an active stylus which writes on the grid in the same manner as a ball point pen. See column 2, lines 63, through column 3, line 7. Other examples of stylus-type or "tablet" input devices are disclosed in U.S. Patent No. 4,672,154, also to Rodgers et al. The second Rodgers et al. patent discloses a cordless stylus which emits a directional electric field from the tip of a conductive pen cartridge. The pen tip is capacitively coupled to a digitizer tablet having an X-Y coordinate system. The pointing device disclosed in the second Rodgers et al. patent may also function as a mouse. See column 1, lines 65 through 68. Both the stylus embodiment and the mouse embodiment disclosed in the second Rodgers et al. patent are both active devices which emit electrostatic fields that interface with the digitizer tablet.

The Rodgers et al. patents disclose digitizing styluses and mouse pointing devices which require a separate rolling surface. Furthermore, both of these patents disclose devices which are active and emit electrostatic fields to interact with the digitizing tablet in order to input data to a computer. Since the devices disclosed in both Rodgers et al. patents are active, the stylus is either attached to the tablet by a wire or contains a replaceable power source such as a battery. In either case, the user is required to grasp a bulky item in order to use the device. Thus, the devices disclosed in the Rodgers et al. patents do not satisfy a long-felt need in the art for pointing and input devices which can be conveniently and efficiently used for a variety of portable and desktop applications.

It has been known in the art to use tactile sensing devices to provide data input. See U.S. Patent No. 4,680,430, Yoshikawa et al. The Yoshikawa et al. patent discloses a coordinate detecting apparatus for determining the coordinate position data of a point on a plane indicated by the touch of a finger tip or other load. Yoshikawa et al. teaches an analog type apparatus which uses a resistive film through which the coordinate position of a point is detected. The point's coordinate position is indicated by applying a load impedance to the position. See column 3, lines 8 through 22.

Tactile devices such as those disclosed in Yoshikawa et al. exhibit a significant disadvantage since they require electrical contact between the finger tip and the device. When individuals possess long fingernails or have other objects about the fingers and hands, good electrical contact is prevented and the device does not function properly.

Other analog tactile devices also exist in the art. See, e.g., U.S. Patent No. 4,103,252, Bobick. The Bobick patent discloses electrodes located on the boundaries of a sensing region. Human touch on an edge of an electrode produces a capacitive charge to vary the time constant of an RC network which is part of an oscillator. The variation in capacitance of the sensor changes the time constant of the RC network and results in a change in frequency in the output signal of the oscillator. <u>See</u> column 2, lines 8-20.

U.S. Patent No. 4,736,191, Matzke, discloses a touch activated control device comprising individual conductive plates which form sectors of a circle. A user's touch on the dielectric layer overlaying the plates is detected by individually charging and discharging each of the sectors in the plates in a sequential manner to determine the increased capacitance of the sector. <u>See</u> column 2, lines 26 through 40.

Display devices which are touch sensitive have also been utilized in the art. <u>See</u> U.S. Patent 4,476,463, Ng et al. The Ng et al. patent discloses a display device which locates a touch anywhere on a conductive display faceplate by measuring plural electrical impedances of the faceplate's conductive coating. The impedances are at electrodes located on different edges of the faceplate. <u>See</u> column 2, lines 7 through 12. The touch sensitive devices disclosed in Ng et al. are generally designed to overlay a computer display and provide positioning information.

The tactile input devices disclosed in the Bobick, Matzke et al. and Ng et al. patents do not satisfy a long-felt need in the art for tactile input devices which accurately and efficiently provide data input for computers and other instrumentation. The devices disclosed in the aforementioned patents fail to satisfy this long-felt need since they effectively only measure position as a fraction of the distance between electrodes located on the boundaries of a sensing region. This leads to measurement inaccuracies since the distance between electrodes is relatively large, thereby causing small errors in the measured fraction to result in large position errors.

Still other tactile sensing devices utilize a grid of electrodes to digitally determine an object's position somewhere on the grid. <u>See</u> U.S. Patent No. 4,550,221, Mabusth, and U.S. Patent No. 4,639,720, Rympalski et al. The Mabusth patent discloses a touch sensitive control device which translates touch location to output signals and which includes a substrate that supports first and second interleaved, closely spaced, non-overlapping conducting plates. The plates are aligned in rows and columns so that edges of each plate of an array are proximate to, but spaced apart from, the edges of plates of the other array. The first and second arrays are periodically connected in a multiplexed fashion to a capacitance measuring circuit which measures the change in capacitance in the arrays. In effect, the Mabusth patent discloses a grid of pixels which are capacitively coupled.

Similarly, the Rympalski et al. patent discloses an electronic sketch pad which contains a graphics input pad having an array of transparent capacitive pixels, the capacitance characteristics of which are changed in response to the passing of a conductive tipped stylus over the surface of the pad. The change in capacitance is sensed by buffers disposed along the columns of the pixel matrix as the rows are scanned at a prescribed scanning rate.

Neither the Mabusth patent nor the Rympalski et al. patent satisfy a long-felt need in the art for tactile input devices which exhibit good position resolution of an object. Since the aforementioned patents teach devices which utilize a grid of electrodes and which operate in a "binary" mode, i.e., measure position by examining each electrode and determining that an object is located or is not located at a point on the grid, the resolution of the position measurement is limited to, at best, a few times the grid resolution. This requires an extremely fine pattern of electrodes to achieve acceptable position resolution. However, a fine pattern of electrodes is extremely expensive and, in most cases, not practical. Therefore, the Mabusth and Rympalski et al. patents do not satisfy a long-felt need in the art for tactile sensing devices which can input data to computers or other instruments.

Yet another input device is shown in EP-A-0 299 204 (Euchner), which device has an insulating substrate carrying on one face a plurality of spaced conductors arranged in a co-planar array. A central conductor is driven with an alternating current which couples to the two conductors to either side of the central conductor, and earthed conductors are provided beyond said two conductors. An operational amplifier is connected to said two conductors to each side of the central conductor and the position of an object is determined by detecting an increase in capacitive coupling between the central conductor and said two conductors.

<u>Summary of the Invention</u>

It is an aim of the present invention to improve the known prior art devices, to facilitate the input of information to a computer. According to one aspect of this invention there is provided apparatus for determining the position of a conductive passive object such as a person's finger, hand or conductive object held in the person's hand which apparatus comprises a plurality of spaced-apart electrodes arranged such that there are mutual capacitances therebetween, means to measure changes in said mutual capacitances and means responsive to the measuring means for determining the position of said object relative to the electrodes;

    **characterised in that**

- said electrodes comprise at least one first strip-like electrode and at least one second strip-like electrode disposed adjacent to the first electrode to cross thereover and define a cross-over region;
- said measuring means comprises means for supplying electrical charges to the at least one first electrode and the at least one second electrode, thereby to develop electric fields such that a mutual capacitance is present between the first and second electrodes, said mutual capacitance decreasing when the object is positioned in proximity to the cross-over region, and the degree of such decrease depending upon the relative position of the object to the cross-over region;

- said measuring means is arranged to measure the decrease in mutual capacitances between the first and second electrodes; and

- said means responsive to said measuring means is arranged to determine the position of the object relative to the cross-over region.

According to a second aspect of this invention, there is provided a method of measuring an object's position using a preferred form of apparatus of this invention as described above, which method comprises:-

- controlling synthesis means repeatedly to synthesise the first and second electrodes by selecting suitable electrode strips the electrical field between the first and second electrodes being distorted by the presence of the object;

- measuring the decrease in the mutual capacitance between the first and second electrodes;

- calculating a coarse position for the object based on at least one target index, said target index reflecting the position of the first or second electrodes;

- calculating a fine position for the object based on the measured decrease in the mutual capacitances between the first and second electrodes; and

- calculating the net position of the object based on the object's calculated coarse and fine positions.

Brief Description of the Drawings

Figure 1 is a block diagram of a touch sensitive control device provided in accordance with this invention.

Figure 2 shows a touch sensitive control device provided in accordance with this invention interfaced with a computer keyboard.

Figure 3 illustrates synthesis of virtual electrodes.

Figure 4 shows synthesis of virtual dipole electrodes from virtual electrodes.

Figure 5(a) illustrates a simple virtual dipole electrode.

Figure 5(b) illustrates a simple virtual dipole electrode wrapped around.

Figure 6 illustrates cyclic virtual dipole electrodes.

Figure 7 is a block diagram of a virtual electrode pad and row and column synthesis circuitry.

Figure 8(a) shows an elevation view of a virtual electrode pad.

Figure 8(b) is a plan view of a virtual electrode pad taken along the 8(b) line of Figure 8(a).

Figure 9 is a block diagram of row and column synthesis circuitry.

Figure 10(a) illustrates object position sensing with a touch sensitive control device provided in accordance with this invention.

Figure 10(b) shows object position sensing taken along the 10(b) line of Figure 10(a).

Figure 11 is a graph of electrical balance versus position for a sensed object.

Figure 12 illustrates a preferred embodiment of the electrical balance measurement circuit of Figure 1.

Figure 13 is a virtual dipole electrode pad on which a single row virtual dipole electrode and two column virtual dipole electrodes are synthesized.

Figure 14 is a graph of balances versus object position for the arrangement of Figure 13.

Figure 15 shows target and base virtual dipole electrode extent with indices updated reflecting sensed object position.

Figure 16 is a flow chart of a control algorithm. Figure 17 is a flow chart to determine the proximity of an object to a virtual dipole electrode pad.

Figure 18 is a flow chart to determine the x position of an object.

Figure 19 is a flow chart to determine the y position of an object.

Figure 20 is a flow chart to accomplish x position index updating.

Figure 21 is a flow chart to accomplish y position index updating.

Detailed Description of Preferred Embodiments

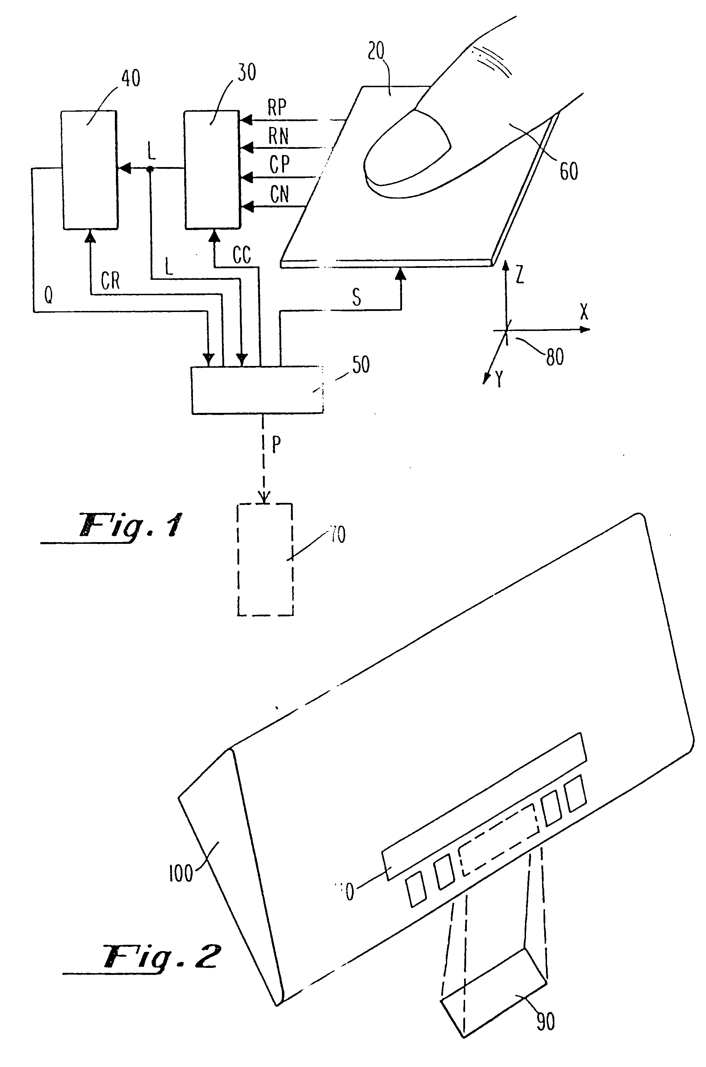

Referring now to the drawings wherein like numerals refer to like elements, Figure 1 is a touch sensitive input device provided in accordance with this invention, comprised of a virtual electrode pad 20, electrical balance measurement circuit 30, balance ratio determination circuit 40, and control circuit 50. In preferred embodiments, virtual electrode pad 20 is in the shape of a sheet. In further preferred embodiments, the virtual electrode pad 20 is capable of forming "virtual electrodes" at various positions on its top and bottom surfaces. The electrodes are denoted as "virtual electrodes" since separate conductive strips on the two sides of pad 20 are used to form single elements denoted "virtual electrodes." The virtual electrodes are connected to electronic circuitry capable of measuring the electrical balance between selected top virtual electrodes and selected bottom virtual electrodes.

In still further preferred embodiments, balance ratio determination circuit 40 is provided to determine the ratio of one balance measurement to another. Control circuit 50 selects appropriate electrodes for balance measurement and ratio determination. The control circuit 50 responds to balance ratios to calculate position information of the sensed object 60. This information may include position along 1 or 2 axes parallel to the electrode pad surface. Additional "proximity" information along an axis perpendicular to the surface of electrode pad 20 may also be determined from an appropriate balance measurement. Position information determined by control circuit 50 is provided to a utilization means 70 which may be any of a variety of electronic or computer devices.

A finger 60 is shown located with its tip in close proximity to the top surface of electrode pad 20. The position of the finger tip over some region in the x and y directions may be sensed, as may its proximity in the z direction by virtual electrode pad 20. The sensed object 60 could also be a thumb tip, or any other conductive object. The coordinate axis 80 is shown for reference.

Referring to Figure 2, a touch sensitive input device 90 provided in accordance with the present invention may provide information indicative of an operator's finger position to a computer, as an alternative to the function commonly performed by a computer mouse. An operator may draw, select commands, or manipulate graphically portrayed objects on a computer with touch sensitive input devices provided in accordance with this invention. The device 90 may be a separate pad which could be held in the hand, placed on a desktop, or in preferred embodiments built into a computer keyboard 100 positioned below the space bar 110 so an operator can manipulate it with his or her thumbs. In other preferred embodiments, the electrodes and insulator might be constructed from transparent materials for attachment to the viewing surface of a computer display screen.

The device 90 provides finger position information to any type of electronically controlled equipment. An operator could control the volume of a stereo, temperature of an oven, time for a cycle of an appliance, selection of a vending machine item, a "video game" electronic entertainment game, or the functions of electronic test- or measuring equipment, for example, an oscilloscope. If a 1-axis form of the device is desired for an application, the electrode pad may be of a straight linear geometry. It could also be circular or cylindrical, having an operation like a common dial or potentiometer knob.

In preferred embodiments, the sensed object may be any substantially conductive object. With an electrode pad constructed on an appropriate scale, the device could sense the position of a nearby hand, person, automobile, or piece of machinery. The touch sensitive control devices provided in accordance with this invention could be further adapted for use as an "electronic blackboard."

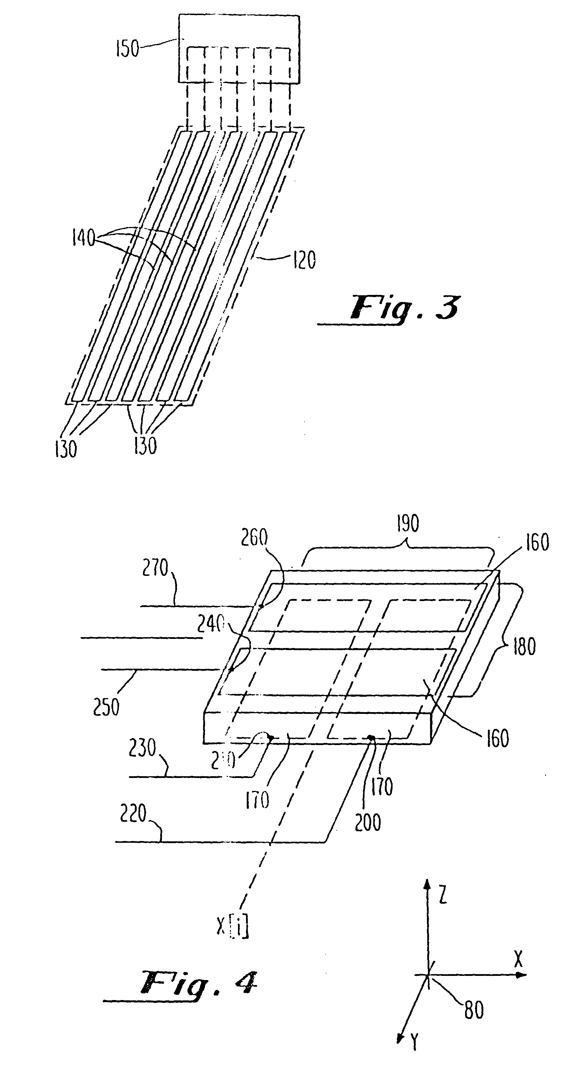

Referring to Figure 3, virtual electrode 120 is comprised of a number of electrode strips 130 deployed over an area. An electrode strip is a sheet conductive region. The strips are separated by insulating spaces 140 but are electrically connected together by electrode synthesis circuit 150. The area over which the connected strips 130 are deployed, including the area between strips 140, is defined as the area of the virtual electrode.

As defined and used throughout,- the notation A|B means A modulo B, that is, the remainder when A is divided by B. Square brackets are used to enclose indices, typically selecting one of a number of similar objects or points. For example, C[i] denotes the "i-th column". All indices are to be taken with respect to an understood row or column modulus. For example, if there are M "columns", then C[i+1] is to be interpreted as C[(i+1) |M].

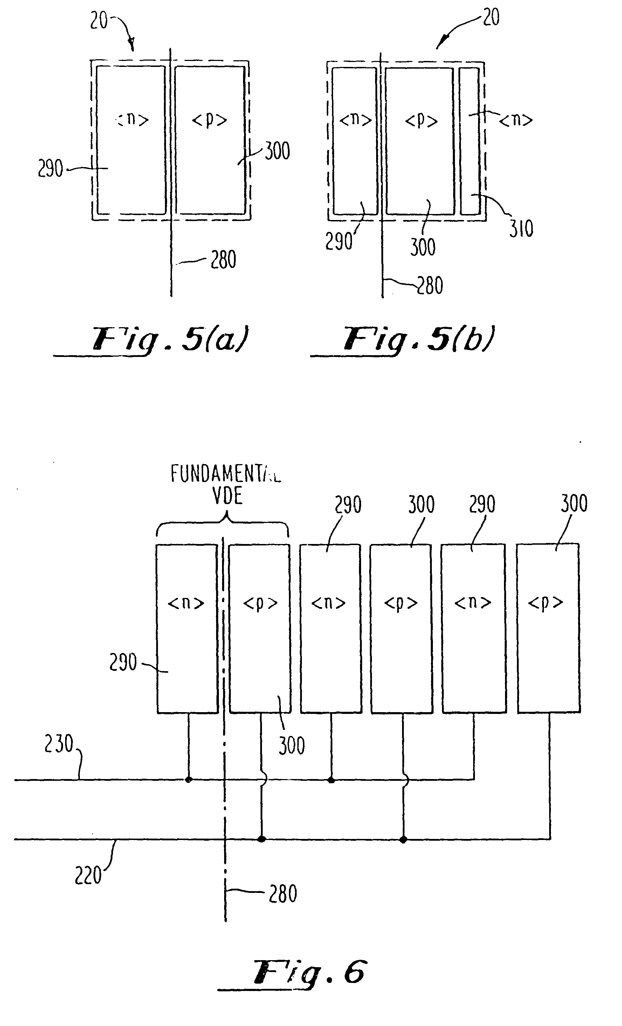

Figure 4 shows a preferred embodiment of virtual electrode pad 20 with two "row" virtual electrodes 160 on the top side of the sheet and two "column" virtual electrodes 170 on the,bottom side. In further preferred embodiments, each virtual electrode is rectangular in shape. The virtual electrodes have a "length" and a "width". The width of the row electrodes 160 are in the y direction with respect to the coordinate system 80, while the width of the column electrodes 170 are in the x direction. The two row virtual electrodes 160 form a row "virtual dipole electrode" (VDE) labelled R[j] at 180. A column VDE labelled C[i] at 190 is also formed.

In still further preferred embodiments, a VDE consists of two virtual electrodes of equal area located along side each other. A virtual electrode extending to the pad edge may "wrap around" to the opposite side's edge. The component virtual electrodes of the VDE are referred to as the "positive" and "negative" halves of the VDE. The location (along the axis in the width direction in the present example is greater for the positive half than for the negative half of the VDE. The positive half of C[i] is denoted by C[i]<p> at 200 and the negative half by C[i]<n> at 210. C[i]<p> is connected to wire CP at 220 and C[i]<n> to wire CN at 230. Similarly, R[j]<p> at 240 is connected to RP at 250 and R[j]<n> 260 to RN at 270.

The "location" of a VDE is defined as the coordinate in the width direction of a location line, i.e., equidistant between the two component virtual electrodes. 'Column VDEs C[0]...C[M-1] are located at x[0]...x[M-1], respectively. Row VDEs R[0]...R[N-1] are located at y[0]...y[N-1], respectively. The "VDE spacing" is the distance between adjacent row (or column, as appropriate) VDE locations. Typically, VDE width is greater than VDE spacing and therefore VDEs may overlap at adjacent locations.

Referring to Figures 5(a) and 5(b), a preferred embodiment of two simple column VDEs as described above is shown. There is a single location line 280 with a negative VDE half 290 on the left and a positive half 300 on the right. Each VDE covers essentially the entire virtual electrode pad 20. In Figure 5(b), the location line is not in the center of the pad. The <n> virtual electrode 290 extends to the left edge of the pad and wraps around to the right edge at 310. In other preferred embodiments, a VDE may have only a positive half wherein the area of the negative half and any mutual capacities to the negative half are defined to be zero.

Figure 6 illustrates another preferred embodiment of a VDE called a "cyclic" column VDE. A cyclic VDE consists of a "fundamental" VDE and additional VDEs located periodically along the axis. All the <n> virtual electrodes 290 are electrically connected together to the CN wire 230. Similarly, all <p> virtual electrodes 300 are connected to CP at 220. The number of component VDEs (including the fundamental VDE) in a cyclic VDE is defined as the "multiplicity". The multiplicity is three for the example shown. The location 280 of the fundamental VDE is taken to be the location of the entire cyclic VDE. This location has the lowest coordinate of all the component VDEs. Simple and cyclic row VDEs are analogous to the column VDEs described here.

Simple VDEs can be considered to be a special case of cyclic VDEs having multiplicity equal to one. The advantage of using higher multiplicity is increased accuracy compared to a virtual electrode pad of the same size and same number of cyclic VDEs but lower multiplicity. Assume the former has multiplicity A and the latter multiplicity B, where A is greater than B. The VDE spacing of the former will be the fraction B/A of the latter. Greater accuracy can be realized with the former due to the smaller VDE spacing.

Multiplicity greater than one implies the sensed object's absolute position can not be determined unambiguously. Position can be determined relative to the location of one component VDE, but there is no way to determine which component VDE. In many cases only relative position (that is, a change in position) needs to be sensed. With multiplicity greater than one, position should be measured frequently enough that the sensed object never-moves more than half the VDE spacing from one measurement to the next. In this fashion, relative position change can be unambiguously determined. A multiplicity of one may be used if absolute position must be measured. Another solution is to use two different periodic VDEs with different VDE spacings.

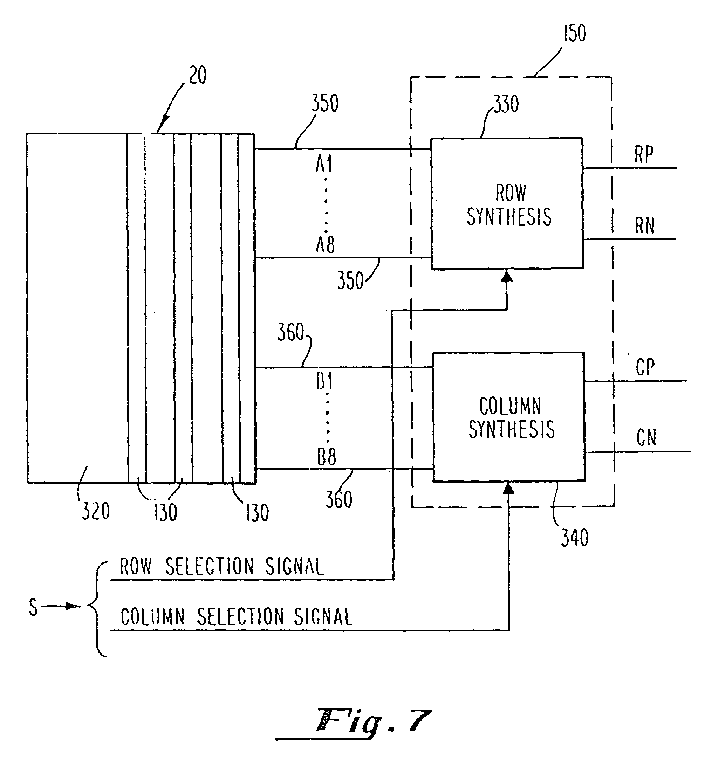

Referring to Figure 7, virtual electrode pad 20 comprises a substrate 320 and a plurality of electrode strips 130 on both sides of the substrate 320. In preferred embodiments, substrate 320 is an insulator. Electrode synthesis circuit 150 comprises row synthesis circuit 330 and column synthesis circuit 340. In further preferred embodiments, electrode pad 20 is connected to row synthesis circuit 330 through lines A1 through A8, shown generally at 350. Similarly, electrode pad 20 is connected to column synthesis circuit 340 through lines B1 through B8, shown generally 360. In still further preferred embodiments, there are eight electrode strips on the top side of pad 20.

On command from control means 50, the electrode synthesis circuit 150 connects selected electrode strips to wires CN, CP, RN and RP to form one row and one column VDE on respective sides of the virtual electrode pad. A signal, S, from control means 50 is input to row synthesis circuit 330 and column synthesis circuit 340 and commands the virtual electrode pad 20 to select one row VDE and one column VDE. The location of each VDE is varied according to the requirements of a control algorithm. Both halves of each VDE are connected to the electrical balance measurement means 30. This connection is via wires RN and RP connected to the positive and negative halves, respectively, of the row VDE; and via wires CN and CP connected to the positive and negative halves of the column VDE. The electrical measurement is then a capacitive measurement between the electrode strips.

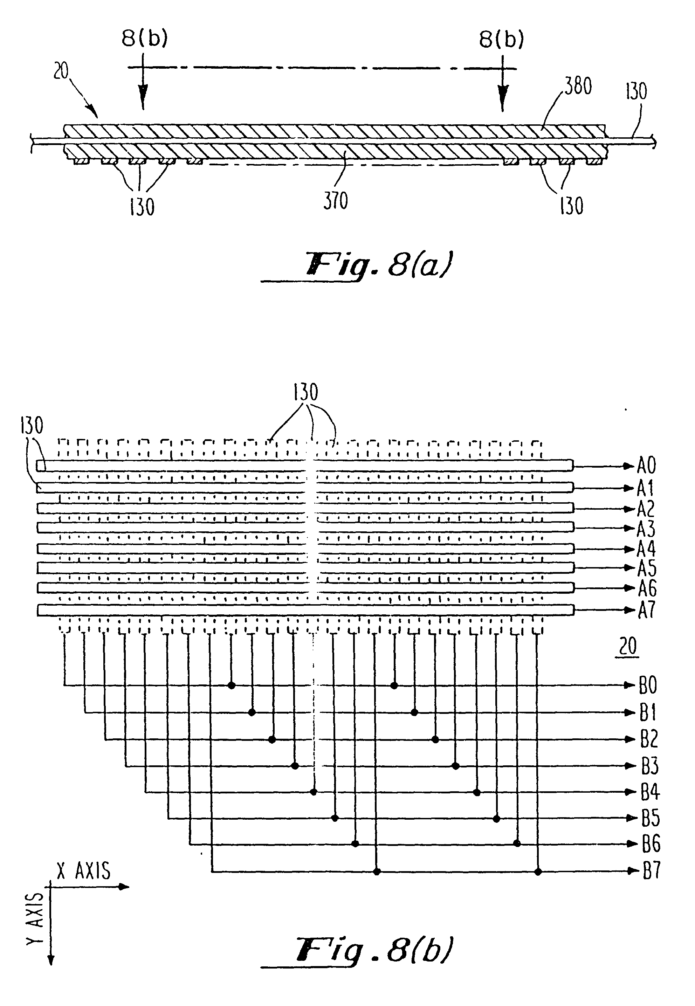

Figures 8(a) and 8(b) show virtual electrode pad 20. Referring to Figure 8(a), flat electrode strips 130 are present on the top and bottom of separator insulating substrate, shown generally at 370. On the top surface of electrode pad 20 is a thin overlay insulator 380 which prevents a sensed object from making electrical contact with electrode strips 130 and substrate 370. It also protects the electrode strips from corrosion and wear.

In further preferred embodiments, pad 20 has overall dimensions of about 2.54 cm high by 8.89 cm wide by 0.20 cm thick. Overlay insulator 380 is a 0.051 cm thick MYLAR sheet, and separator insulator 370 is a 0.15 cm thick epoxy-glass printed circuit board material. Electrode strips 130 are 0.10 cm wide copper traces on 0.51 cm centers fabricated on both sides of the separator insulator using standard printed circuit board techniques. Dimensions may be varied considerably while still achieving good functionality. The width of the traces, spacing between the traces, and thickness of the circuit board insulator and overlay insulator may be selected for the particular application and object being sensed. The above-mentioned dimensions give good results for a human finger tip.

Referring to Figure 8(b), there are eight electrode strips on the top side of the separator insulator 370 perpendicular to the y axis. Wires labelled A0 through A7 are attached to these 8 electrode strips. In still further preferred embodiments, there are twenty-four electrode strips on the bottom of separator insulator 370 perpendicular to the x axis. The twenty-four electrode strips are connected to wires labelled B0 through B7 as shown. Connection of three column electrode strips to each column wire is consistent with multiplicity of three. The multiplicity is one for the rows.

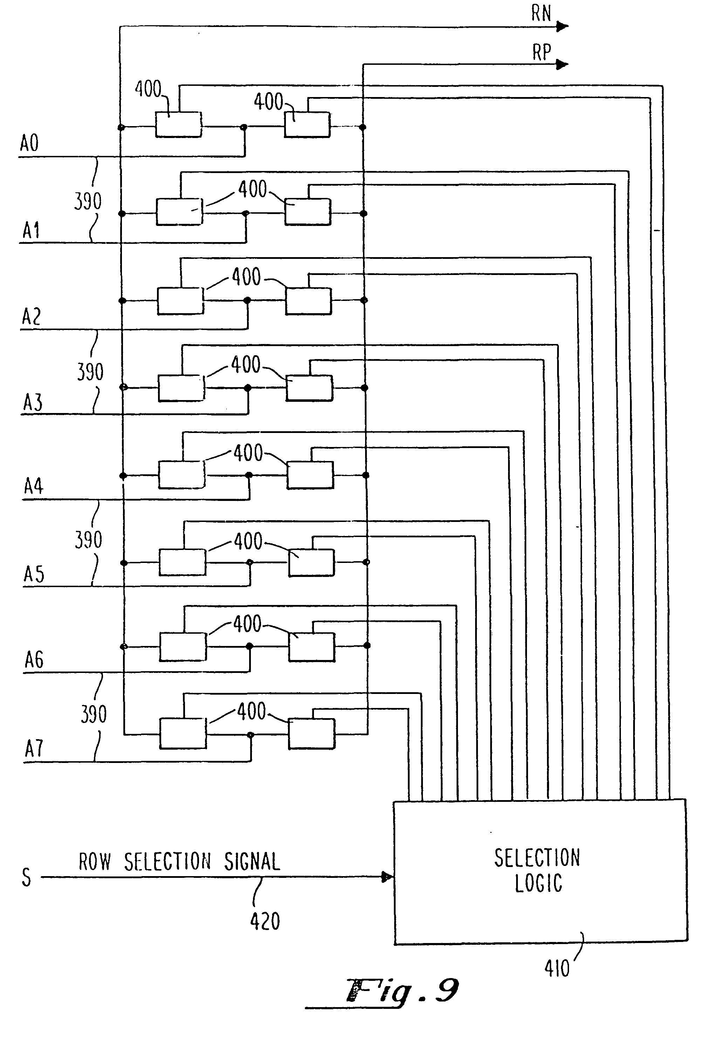

Figure 9 illustrates a preferred embodiment of an implementation of row virtual electrode synthesis circuit 330. Each electrode strip wire A0 through A7, shown generally at 390, is connected to a pair of electronic switches at 400. In preferred embodiments, electronic switches 400 are CMOS analog switches. One or the other switch of each pair is electrically conducting. The electrically conducting switch connects the associated electrode strip to either wire RN or RP, depending on whether that strip is to be part of a VDE negative or positive half.

Each switch 400 is controlled by the selection logic block shown at 410. The selection logic block 410 responds to the row selection signal 420 which is a component of signal S. The following selection table shows selection logic for synthesis of all possible row VDEs in the pad of Figure 8.

| SELECTION TABLE | | | | | | | | |
|---|---|---|---|---|---|---|---|---|
| | Selection Signal | | | | | | | |
| | R[0] | R[1] | R[2] | R[3] | R[4] | R[5] | R[6] | R[7] |
| A0 | RP | RN | RN | RN | RN | RP | RP | RP |
| A1 | RP | RP | RN | RN | RN | RN | RP | RP |
| A2 | RP | RP | RP | RN | RN | RN | RN | RP |
| A3 | RP | RP | RP | RP | RN | RN | RN | RN |
| A4 | RN | RP | RP | RP | RP | RN | RN | RN |
| A5 | RN | RN | RP | RP | RP | RP | RN | RN |
| A6 | RN | RN | RN | RP | RP | RP | RP | RN |
| A7 | RN | RN | RN | RN | RP | RP | RP | RP |

In this way, one of eight possible VDEs, R[0] through R[7], are selected to be synthesized from electrode strips on the pad. The circuitry for columns may be identical to that for rows.

The pad dimensions, number of electrode strips to form a VDE, and multiplicity of VDEs along each axis may be varied. Some electrode strips can be unconnected when synthesizing a VDE. This provides additional spacing between VDE halves. The pad might be formed into a sphere, cup, cylinder, section of any of these, or other non-planar shape. The axes on the two sides of the pad need not be orthogonal. Axis systems other than rectangular coordinates might be used. With a radial coordinate system, "ring" virtual electrodes (directly analogous to the row virtual electrodes described above) would be shaped as rings while "wedge" virtual electrodes (directly analogous to the column virtual electrodes described above) would be shaped in a "pie-section."

The electrical balance measurement circuit 30 measures the mutual capacitance between virtual row and column electrodes in the virtual electrode pad 20, defined as the "balance". Referring to Figure 1, the electrical balance measurement circuit is connected to pad 20 by wires RP, RN, CP and CN. The electrical balance measurement circuit measures the capacitive balance between the virtual row and column electrodes. Thus, the terms electrical balance measurement and capacitive balance measurement are used interchangeably throughout.

The capacitive balance measurement circuit outputs a signal which is responsive to the capacitive balance. This signal is utilized by the balance ratio determination circuit 40 and by the control circuit 50. The output signal might be a voltage utilized directly in an analog voltage form, or might be converted to digital form by an analog-to-digital converter.

To understand capacitive balance as it is used throughout, first define M(A,B) to denote the well-known mutual capacitance between virtual electrodes A and B when all other electrodes in the pad are grounded. $M(C[i]<p>,R[j]<n>)$, for example, denotes the mutual capacitance between the positive half of VDE C[i] and the negative half of VDE R[j]. Then define the capacitive balance between VDEs C[i] and R[j],L(C[i],R[j])to be given by:

$$L(C[i],R[j]) = Kfg * \{M(C[i]<p>,R[j]<n>) -$$

$$M(C[i]<p>,R[j]<p>) + M(C[i]<n>,R[j]<p>) -$$

$$M(C[i]<n>,R[j]<n>)\}.$$

Kfg is a constant scale factor which, in a preferred embodiment, depends on reference signal amplitude and amplifier gain of the electrical balance measurement circuit 30. Balance is a useful electrical quantity because it is indicative of the position of a conductive object, as described herein.

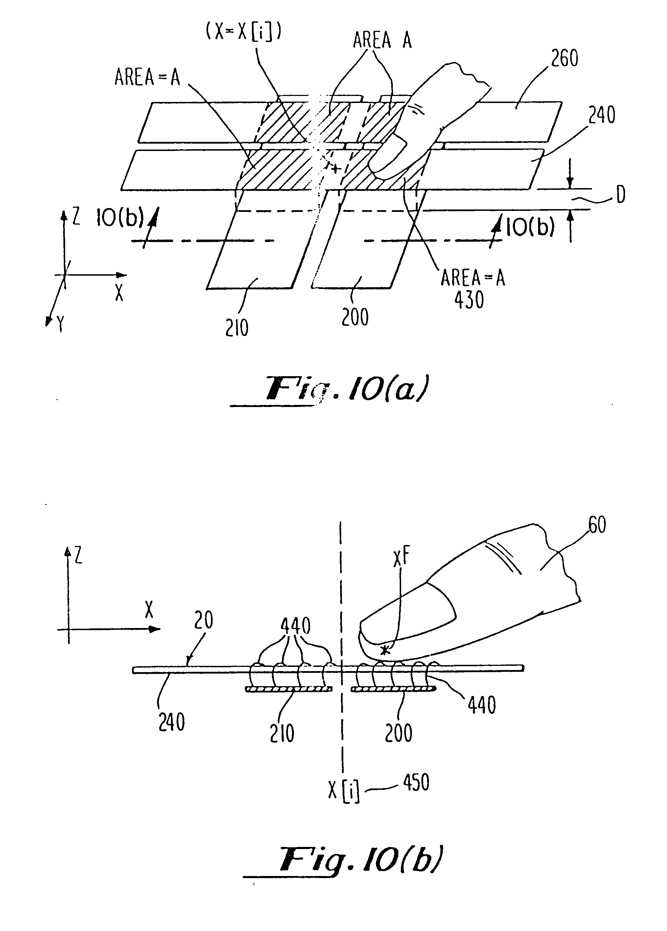

Referring to Figure 10(a), sensed object 60 is above the virtual electrode pad 20 with VDEs synthesized appropriate to the object's x position. The location of the object is at coordinates (xF, yF, zF). The object's position is related to a weighted average location of all points on the surface of the object, with greater weight given to those points closer to pad 20. A row VDE, R[j], is located with its positive half R[j]<p> 240 roughly centered in the y direction underneath the sensed object.

A column VDE, C[i], is located at x[i] near the x position of the sensed object. R[j] is called the "base" VDE and C[i] is the "target" VDE with respect to this measurement. The row and column VDEs are connected to RN and RP, and CN and CP, respectively. The separator insulator between base and target has a thickness D. The overlap between C[i]<p> and R[j]<p> is of an area, A, shown at 430, which equals the area of each of the other three overlaps between the C[i] and R[j] electrode halves.

Figure 10(b) illustrates this situation from a side view along the x axis. Finger tip 60 is shown as a representative sensed object positioned at xF. As is well known from the theory of parallel plate capacitors, $M(C[i]<p>,R[j]<p>) = A^*E/D$, approximately, where E is the dielectric constant of the separator insulator. The same expression applies for each of the other three mutual capacities between the C[i] and R[j] electrode halves. All four mutual capacities are approximately equal. These approximations neglect an addition to $A^*E/D$ due to coupling of fringe electrostatic field lines shown at 440. If there were no finger tip present, the fringe field for all four would be equal. This balance would result in the exact equality:

$$L(C[i],R[j]) = 0.$$

A conducting object, such as finger tip 60, in close proximity upsets this balance. The finger tip, shown here positioned at xF > x[i] at 450, intercepts more of the fringe field of C[i]<p> than of C[i]<n> resulting in the inequality:

$$M(C[i]<p>,R[j]<p>) < M(C[i]<p>,R[j]<n>).$$

The finger tip does not substantially influence the fields coupled to R[j]<n> since the finger tip's y position is over R[j]<p> instead of R[j]<n>. Thus:

$$M(C[i]<n>,R[j]<p>) = M(C[i]<n>,R[j]<n>).$$

The net effect is that

$$L(C[i],R[j]) > 0$$

for the finger tip positioned at xF > x[i]. By similar analysis, for xF = x[i], balance is preserved and L(C[i],R[j]) = 0. Similarly, for xF < x[i], L(C[i],R[j]) < 0.

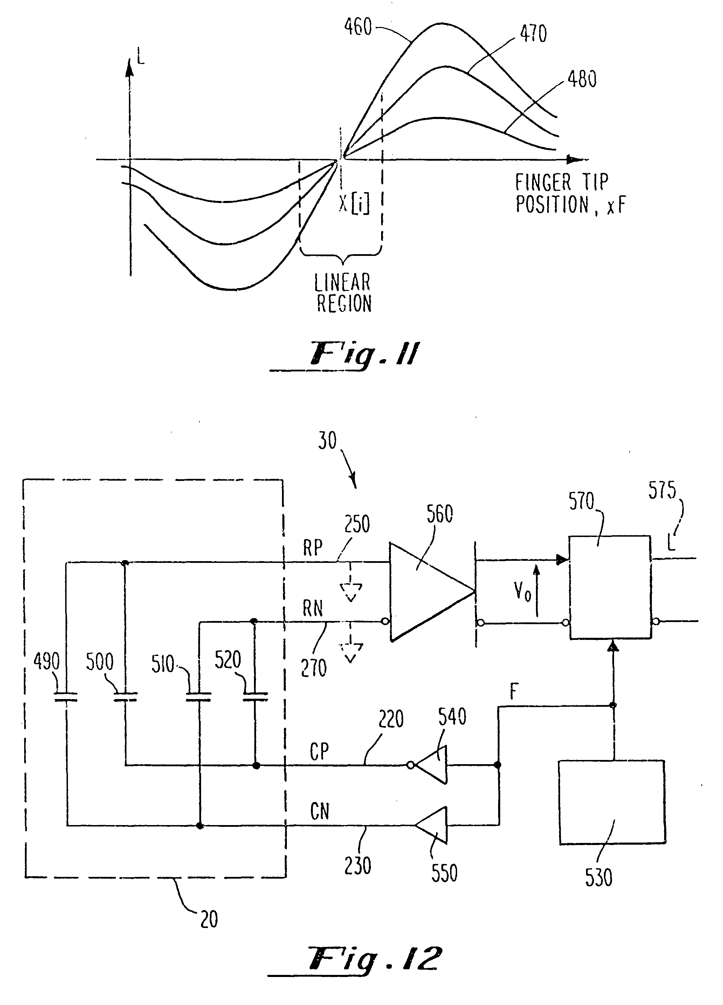

Figure 11 plots the balance L, between the base and target VDEs for the situation of Figures 10 (a) and 10 (b) as a function of finger tip position xF. Plot 460 is for the case of the finger tip centered over the base VDE positive half (yF = y0), and as close to the pad as is possible (zF = z0). This case gives the largest magnitude change with position. Other plots 470 and 480 illustrate different y or greater z. The magnitude of the change is less in these cases since the finger intercepts fewer fringe field lines. In all cases, there is a region of xF around xF = x[i] where L is essentially a linear function of xF. This means that $L = K(yF,zF)^*(xF-x[i])$ for some slope K which is dependent on yF, zF, and Kfg, as well as electrode, and sensed object geometries.

Figure 12 is a block diagram of a preferred embodiment of electrical balance measurement circuit 30. Also shown is a simplified electrical model of virtual electrode pad 20 connected to the capacitive balance measurement circuit 30 via wires RP 250, RN 270, CP 220, and CN 230. This model consists of 4 capacitors representing the mutual capacities M(C<n>,R<P>) 490, M(C<p>,R<p>) 500, M(C<n>,R<n>) 510 and M(C<p>,R<n>) 520 between halves of the base and target VDEs. The reference signal source 530 generates an alternating current (AC) reference signal, F, with a frequency substantially higher than the frequency at which position measurements are to be made.

In preferred embodiments, this frequency is about 140 KHz. For human finger tip sensing, frequencies from 20 KHz to 500 KHz will give acceptable results. Possible wider frequency ranges are possible when other objects are sensed. The reference signal 530 goes to a pair of drivers. One driver 540 is an inverting type and drives the positive half of the synthesized column VDE via wire CP. The other driver 550 is a non-inverting type and drives the negative half via wire CN. CN 230 is thus driven with an in-phase version of F while CP 220 is driven with negative F(-F).

Wires RP 250 and RN 270 connect the positive and negative halves of the row VDE to non-inverting and inverting inputs, respectively, of a differential charge amplifier 560. Differential charge amplifier 560 maintains RP and RN at an AC virtual ground so that the AC voltage across each mutual capacitance 500 or 520 is -F and the AC voltage across each mutual capacitance 490 or 510 is +F. The amount of charge coupled onto RP is F*M(C<n>,R<p>) - F*M(C<p>,R<p>). The amount onto RN is F*M(C<n>,R<n>)- F*M(C<p>,R<n>).

The charge amplifier 560 produces an AC differential output voltage, Vo, equal to a gain factor, G, times the charge coupled onto RP minus that on RN. This yields the following relationship:

$$Vo = (F * G) * \{ M(C\!<\!n\!>\!,R\!<\!p\!>) - M(C\!<\!p\!>\!,R\!<\!p\!>) +$$

$$M(C\!<\!p\!>\!,R\!<\!n\!>)$$

$$- M(C\!<\!n\!>\!,R\!<\!n\!>) \} = L(C,R).$$

Vo is the balance between C and R, denoted herein as L(C,R). Both G and the magnitude of F are constant scale factors. The product (F * G) is the scale factor, Kfg, in the above definition of the balance, L.

In preferred embodiments, Vo feeds into a double balanced synchronous detector 570 for measurement. The detector 570 also uses input signal F as a reference. Detector 570 recovers the amplitude of a signal synchronized to reference signal F in the presence of electrical noise signals having much greater amplitude. This noise rejection is important since important the amount of charge coupled across the mutual capacitances 490, 500, 510 and 520 of virtual electrode pad 20 may be very 20 may be very small in magnitude. The output of the charge amplifier 560 therefore consists of a significant noise component, N, in addition to the desired signal. The output of charge amplifier 560 can thus be written as:

$$Vo' = Vo + N = L(C,R) + N.$$

The output of the detector 570 is a signal proportional to the component of Vo which is synchronous with the reference signal F. Since the noise N is not synchronized to F, it does not affect the detector output signal 575, which is therefore a direct measurement of L(C,R). The signal L at 575 can be encoded by any of a number of well known means, for example, in digital format or with a single ended or double ended voltage, current, or charge. The use of double balanced detector 570 minimizes noise and inaccuracy. In further preferred embodiments, a single balanced detector may be used.

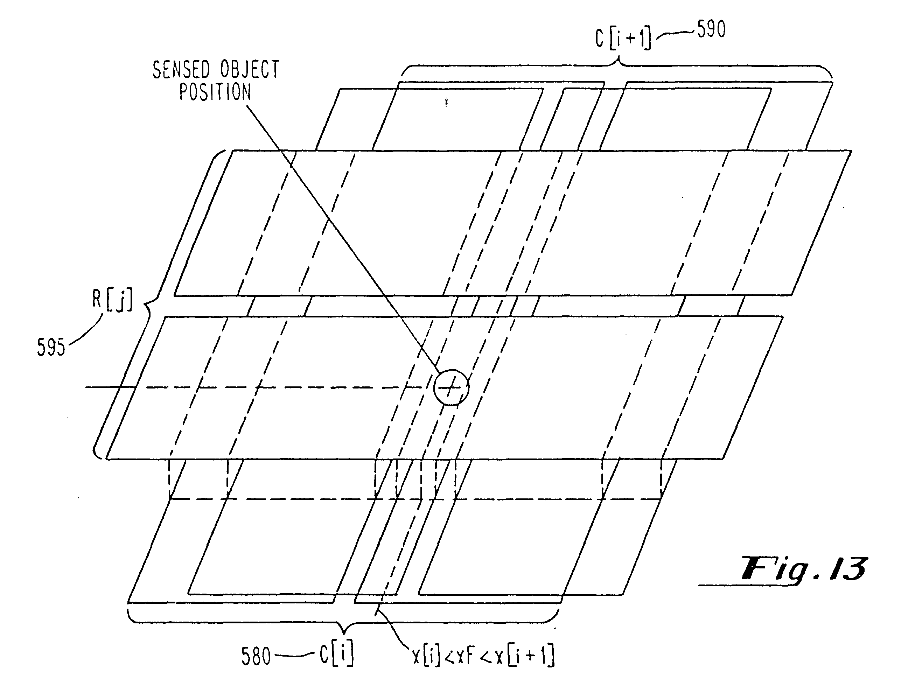

Referring to Figure 13, virtual electrode pad 20 has two column VDEs, C[i] 580 and C[i+1] 590 at adjacent locations, formed on the bottom side of the pad. A row VDE, R[j] 595 is formed on the top side. The position of a sensed object is also indicated, although the object itself is not shown. The object's x position, xF, is between the locations of the two column VDEs, x[i] and x[i+1].

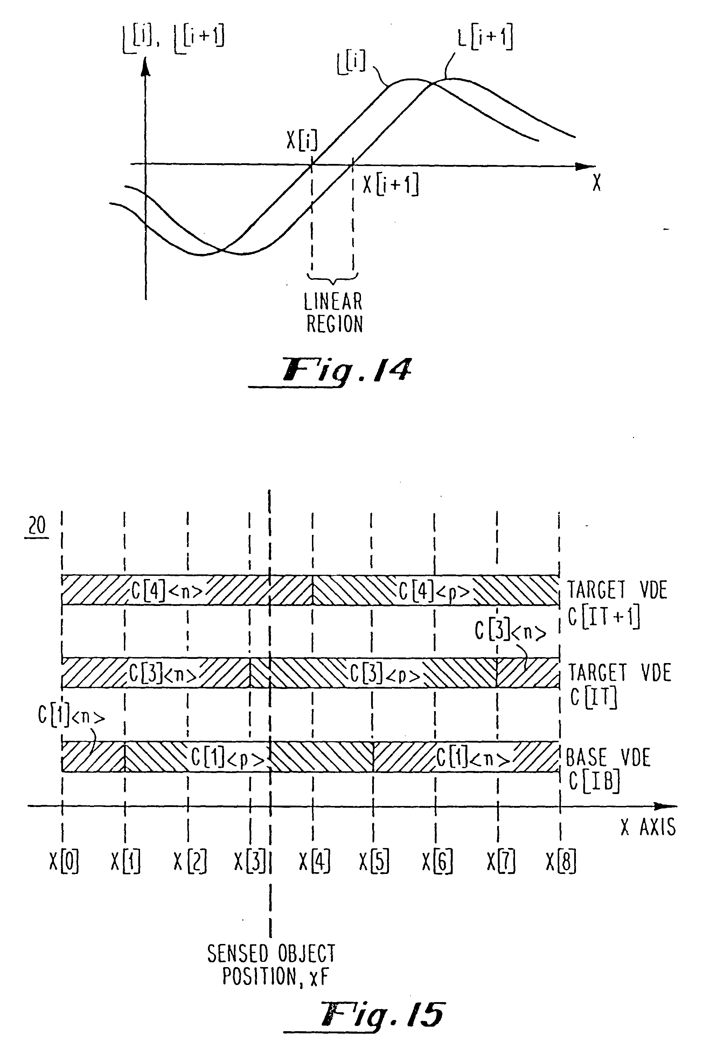

Figure 14 illustrates the variation of two balances measured in the pad 20 of Figure 13. Each balance varies with the xF position of a sensed object. L[i] is the balance between base R[j] and target C[i]. L[i+1] is the balance between R[j] and C[i+1]. Figure 11 showed the general linear nature of capacitive balance L, responsive to the object's xF position. The slope, K, of the general response varies with object yF and zF position and also includes the effect of the scale constant Kfg described above. Both L[i] and L[i+1] in Figure 14 are essentially linear over the region between x[i] and x[i+1]. The slope constant, K, is essentially the same for both measurements. The measurements are expressed as:

$$L[i] = K*(xF-x[i]),$$

and

$$L[i+1] = K*(xF-x[i+1]).$$

In preferred embodiments, a balance ratio, Q[i], can be defined as:

$$Q[i] = L[i]/(L[i]-L[i+1]).$$

Other expressions for Q[i] may be developed which are functionally equivalent. From the above expressions for L, Q[i] can be rewritten as:

$$Q[i] = (xF-x[i])/(x[i+1]-x[i]).$$

Q[i] varies linearly from a value of zero for an object at xF = x[i] up to one at xF = x[i+1]. Algebraic rearrangement gives an expression for position xF as:

$$xF = Q[i]*(x[i+1]-x[i]) + x[i].$$

It is advantageous to calculate Q[i] so the position xF can be determined independently of yF or zF. The balance ratio Q[i], is calculated by balance ratio determination circuit 40 using successive capacitive balance measurements L[i] and L[i+1].

The discussion regarding Figures 13 and 14 and the definition of balance ratios all contemplated a preferred embodiment in which two adjacent VDEs, with indices [i] and [i+1] are used to develop a balance ratio. Two non-adjacent VDEs, e.g., with indices [i] and [i+n] could also be used wherein n is considered an index offset.

Referring again to Figure 1, control circuit 50 accepts balance measurements, L, and ratios, Q, from balance measurement circuit 30 and ratio determination circuit 40. Control circuit 50 generates a selection signal, S, which is provided to virtual electrode pad 20. Signal S contains row and column selection components. In preferred embodiments, control circuit 50 is a microprocessor, microcontroller, or other digital logic circuitry.

Control signal S specifies one row VDE and one column VDE to be formed on pad 20 at any particular moment. Thus, the control circuit specifies or selects the particular column and row VDE at given times. Control circuit 50 also provides signals to balance measurement circuit 30 and balance ratio determination circuit 40 directing these two components to perform measurements and calculations. It also provides position signals, P, to utilization means 70.

As herein defined, the object's "coarse" position means position with resolution equal to the distance between adjacent VDEs. The object's "fine" position means position with resolution some number of times greater than the coarse position. The particular multiple of the coarse resolution is a function of the capacitive balance measurement resolution, balance ratio determination resolution, and the degrading effects of electronic noise. In preferred embodiments, this multiple is 128.

Assume that one of M column VDEs and one of N row VDEs can be selected from the pad 20. In preferred embodiments, M = 8 and N = 8. Each VDE covers the entire surface of the pad by wrapping around as described and shown in Figure 5(b).

Assume i and j are VDE indices taken from what may be called the set of "normal" indices. Row VDE R[i+N/2] is the same as R[i] with positive and negative halves interchanged. Similarly C[j+M/2] is an interchanged version of C[j]. Interchanging positive with negative halves of both the row and the column VDEs does not effect a balance measurement. This will be appreciated by recalling the definition of balance, L. Since operation is based on balance measurements, all normal column and row indices can be consistently increased by M/2 and N/2, respectively, to give alternate indices. Alternate indices correspond to coarse positions which are consistently offset by M/2 times the column VDE spacing and N/2 times the row VDE spacing.

In further preferred embodiments, it is not possible to determine if normal or alternate indices are being used at any particular time, but the type of indices being used will not switch while a sensed object remains in proximity to the pad. In still further preferred embodiments, position change is the same with normal and alternate indices. Fortunately, in many applications only a change in position is important. If absolute position must be determined, an additional measurement, L', that is sensitive to interchanging positive and negative halves can be defined by the expression:

$$L'(C[i],R[j]) = Kfg * \{M(C[i]<p>,R[j]<n>) +$$

$$M(C[i]<p>,R[j]<p>) \quad - \quad M(C[i]<n>,R[j]<p>) \quad -$$

$$M(C[i]<n>,R[j]<n>)\}.$$

Measurement circuitry to determine L' is a variation of the circuitry used for determining L. The control means may be adapted to use L' and distinguish normal indices from alternate indices in preferred embodiments.

A goal of the control circuit is to perform repeated updating of base indices, IB and JB, and target indices, IT and JT, such that the sensed object position is roughly centered within the positive halves of VDEs C[IB] and R[JB], and located in intervals x[IT] to x[IT+1] and y[JT] to y[JT+1]. This relates to the coarse position of the object.

Referring to Figure 15, one possible.xF object position and the extent of appropriate column VDEs is shown. In this example, IB = 1 and IT = 3. Position xF is located between x[3] and x[4], the respective locations of target VDEs C[3] and C[4]. Furthermore, xF is roughly centered within the positive half of base VDE C[1]. An example for the y position and row VDEs is analogous.

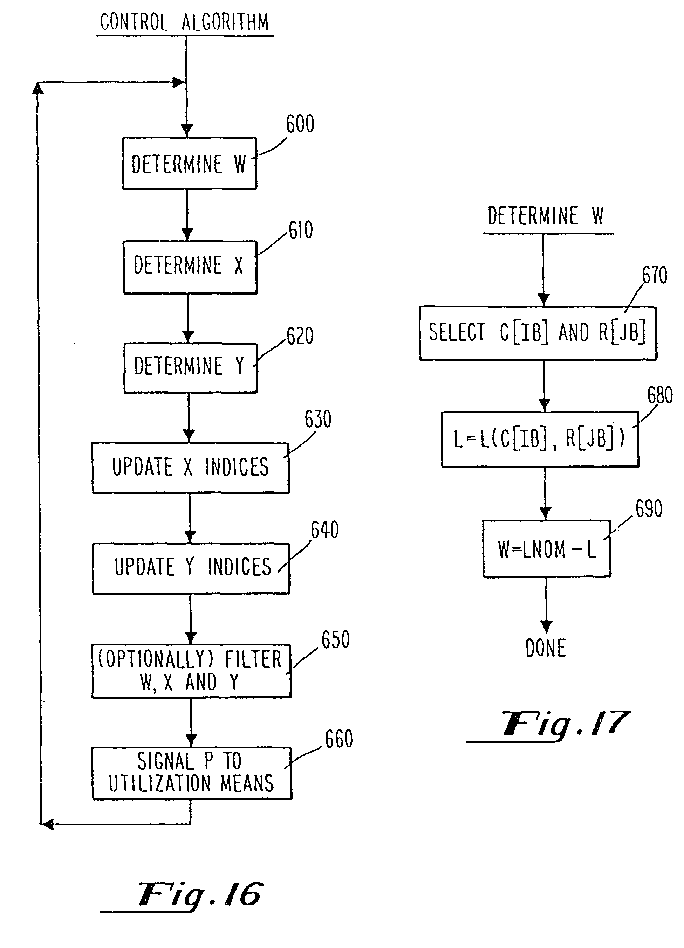

Referring to Figure 16, a flow chart of a preferred embodiment of an algorithm executed by the control means is shown. At step 600, the control means determines the proximity, W, of the sensed object to the pad generally in the z direction. The object's x position is determined at step 610 and the object's y position is determined at step 620. The control means updates the x indices IB and IT at step 630 and the y indices JB and JT at step 640.

Signal filtering to reduce noise in the reported position, to vary the rate of reporting depending on position change activity, or to eliminate spurious position change or inaccuracies as the sensed object passes through the proximity threshold transition, is performed at step 650. Signal P is sent to a utilization means at step 660. One component of P indicates the proximity W, or closeness of contact, between the object to be sensed and the pad. If the proximity is sufficiently close, then other components of P indicate the x and y position of the object. This information could be coded in a variety of ways, for example, as absolute position, or relative position, that is, the change in the object's position since the last signal.

The value of W as determined at step 600 above may be used to determine if an object is in sufficiently close proximity to the pad that the x and y position determined in steps 610 and 620 is meaningful. This is done by comparing W to some threshold value Wth > 0. If W > Wth then the object is sufficiently close SO that position information is meaningful. If W ≤ Wth then the object is not close and the position information is not meaningful. The value Wth can be determined empirically by locating the object to be sensed at a proximity slightly more distant than that at which position sensing is desired to occur. The value of W determined with this arrangement is a suitable value for Wth.

In preferred embodiments, the control means makes one complete cycle through this algorithm every 5.5 milliseconds. Other periods may be achieved with no significant change in operation. The period may be further adapted for the particular utilization means used by the system. If the pad multiplicity is greater than one, the period should be sufficiently short to ensure that the sensed object never moves more than half the fundamental VDE width during one period.

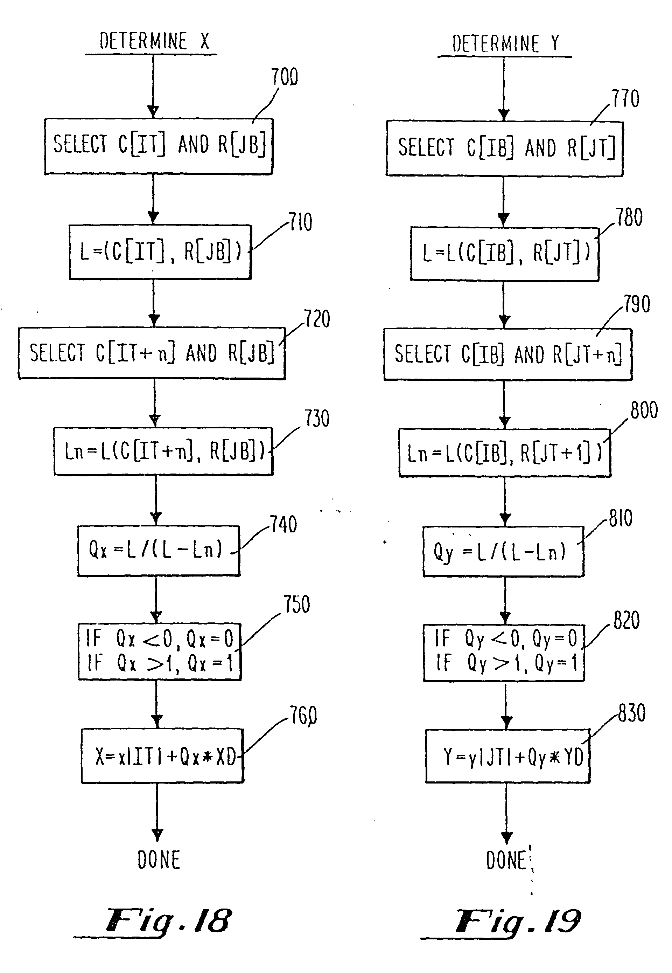

Referring to Figure 17, a flow chart for determining W is shown. At step 670, a column VDE is selected corresponding to index IB, and a row VDE is selected corresponding to JB. At step 680, the capacitive balance measurement means is directed to measure the balance L between the row and column VDEs which have been selected. At step 690, the proximity is determined and defined to be a constant equal to LNOM minus L. LNOM is set such that W equals zero when no object is present to be sensed. W increases as the object comes into closer proximity with the pad.

Figure 18 details determination of the object's x position. At step 700, a column VDE corresponding to index IT is selected and a row VDE corresponding to JB is selected. At step 710, the capacitive balance measurement circuit is directed to measure the balance L, between C[IT] and R[JB]. Selection of a column VDE corresponding to index IT+n and a row VDE corresponding to JB is accomplished at 720. The number n is a target index offset. In preferred embodiments, n = 1. In other preferred embodiments, n may have an integer value greater than one.

At step 730, the capacitive balance measurement circuit measures the balance Ln between C[IT+n] and R[JB]. At step 740, the balance ratio determination circuit calculates $Qx = L/(L-Ln)$ where L and Ln are the two balances previously measured.

Qx is limited at step 750 to be in the range of zero through one, inclusive. If Qx is less than zero, it is set to zero. If Qx is greater than one, it is set to one.

At step 760, the X position = $x[IT] + Qx^{*}XD$ is calculated. XD is the distance between column VDE locations x[IT] and x[IT+n]. The calculation for X interpolates a position between these two column VDE locations.

Referring to Figure 19, determination of the object's Y position is shown. At step 770, a column VDE corresponding to index IB is selected, and a row VDE corresponding to JT is selected. At step 780, the capacitive balance L between C[IB] and R[JT] is measured. Selection of a column VDE corresponding to index IB and a row VDE corresponding to JT+n is accomplished at step 790.

At step 800, the capacitive balance measurement means measures the balance Ln, between C[IB] and R[JT+n]. The balance ratio determination means calculates $Qy = L/(L-Ln)$ at step 810 where L and Ln are the two balances just measured. At step 820, Qy is limited to the range of zero through one, inclusive. If Qy is less than zero, it is set to zero. If Qy is greater than one, is set to one.

At step 830, the object's y position = $y[JT] + Qy^*YD$ is calculated. YD is the distance between row VDE location y[IT] and y[IT+n]. The calculation for y position interpolates a position between the two row VDE locations.

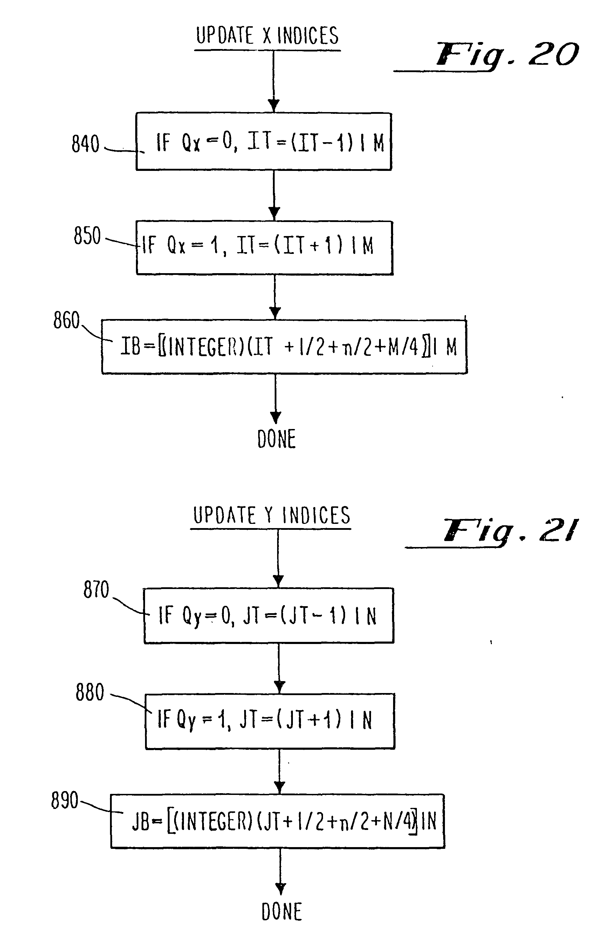

Referring to Figure 20, the X indices are updated. At step 840, the Qx ratio is tested. If Qx equals zero, the sensed x position is at, or possibly to the left of, C[IT]. In this case, one is subtracted from the current IT. The result is taken modulo M, where M is the number of column VDEs. This updates IT corresponding to the next column to the left.

At step 850, Qx is again tested. If Qx equals one, the sensed x position is at, or possibly to the right of, C[IT+n]. In this case, one is added to IT, modulo M. This updates IT to the right.

At step 860, the value IT + 1/2 + n/2 + M/4 is rounded to the nearest integer. The rounded value is taken modulo M and assigned to IB. This ensures that the positive half of C[IB] is nearly centered over the region between the updated x[IT] and x[IT+n].

Referring to Figure 21, the Y indices are updated. At step 870, the Qy ratio is tested. If Qy equals zero, the sensed Y position is at, or possibly below, R[JT]. In this case, one is subtracted from the current JT. The result is taken modulo N, where N is the number of row VDEs. This updates JT corresponding to the next row below.

Qy is again tested at step 880. If Qy equals one, the sensed Y position is at, or possibly above, R[JT+n]. In this case, one is added to JT, modulo N. This updates JT to the next row above. At step 890, the value JT + 1/2 + n/2 + N/4 is rounded to the nearest integer. The rounded value is taken modulo N and assigned to IB. This ensures that the positive half of R[IB] is nearly centered over the region between the updated y[JT] and y[JT+n]. In preferred embodiments, a fractional number A + 1/2 is rounded down to the integer A. In further preferred embodiments, A + 1/2 is rounded up to A + 1.

The circuitry to accomplish the above-referenced flow charts can be implemented in a variety of ways. All or part of the circuitry might be contained in one or more Application Specific Integrated Circuits (ASICs). In preferred embodiments, the circuitry may be implemented using standard integrated circuits, microprocessors, microcomputers, or other electronic components.

There have thus been described certain preferred embodiments of methods and apparatus provided in accordance with this invention to sense an object's position. While preferred embodiments have been disclosed, it will be recognized by those with skill in the art that modifications are within the scope of the invention, as defined in the appended claims.

**Claims**

1. Apparatus for determining the position of a conductive passive object (60) such as a person's finger, hand or conductive object held in the person's hand which apparatus comprises a plurality of spaced-apart electrodes arranged such that there are mutual capacitances therebetween, means (30) to measure changes in said mutual capacitances and means (40) responsive to the measuring means for determining the position of said object (60) relative to the electrodes;

   **characterised in that**

   - said electrodes comprise at least one first strip-like electrode (160; 200, 210) and at least one second strip-like electrode (170; 240, 260) disposed adjacent to the first electrode (160; 200, 210) to cross thereover and define a cross-over region (430);
   - said measuring means comprises means (530,540,550) for supplying electrical charges to the at least one first electrode (160; 200,210) and the at least one second electrode (170; 240,260), thereby to develop electric fields such that a mutual capacitance is present between the first and second electrodes, said mutual capacitance decreasing when the object is positioned in proximity to the cross-over region, and the degree of such decrease depending upon the relative position of the object (60) to the cross-over region;
   - said measuring means (30) is arranged to measure the decrease in mutual capacitances between the first and second electrodes (160,170; 200,210,240, 260); and
   - said means (40) responsive to said measuring means (30) is arranged to determine the position of the object (60) relative to the cross-over region.

2. Apparatus as claimed in claim 1, wherein the electrodes (160,170; 200,210,240,260) are elongate and substantially longer than the length or width of the cross-over region.

3. Apparatus as claimed in claim 1 or claim 2, further comprising a plurality of spaced-apart second electrodes (240, 260) disposed adjacent to the first electrode (160) to cross thereover and define:-

   - a plurality of cross-over regions, such that mutual capacitances are present between the first electrode and each of the second electrodes;
   - wherein said means (30) for measuring measures the decrease in mutual capacitances between the first electrode and each of the second electrodes; and
   - wherein said means (40) responsive to said measuring means determines the position of the object (60) relative to the cross-over regions.

4. Apparatus as claimed in claim 3, wherein the second electrodes (240,260) are arranged generally parallel with one another, and generally at right angles with respect to the first electrode.

EP 0 814 423 B1

5. Apparatus as claimed in claim 3 and further comprising:-

- a plurality of spaced-apart first electrodes (200, 210) disposed adjacent to the second electrodes (240,260) to cross thereunder and define a cross-over region at each location where one of the second electrodes crosses over one of the first electrodes, such that mutual capacitances are present between each of the first electrodes and each of the second electrodes;
- wherein said (30) means for measuring measures the decrease in mutual capacitances between the first electrodes and the second electrodes; and
- wherein said means (40) responsive to said measuring means determines the position of the object (60) relative to the cross-over regions.

6. Apparatus as claimed in claim 5, wherein the first electrodes (200,210) are arranged generally parallel with one another, the second electrodes (240,260) are arranged generally parallel with one another, and the first and second electrodes cross over generally at right angles.

7. Apparatus as claimed in claim 5 or in claim 6, further including insulator means (370) disposed between the or each first electrode and the or each second electrode.

8. Apparatus as in claimed in any of claims 5 to 7, wherein each of the first and second electrodes (200,210, 240,260) comprises a plurality of electrode strips (130) operatively connected together.

9. Apparatus as claimed in claim 8, and further including:-

- synthesis means (150) operatively coupled to the electrode strips (130) of the first electrodes (200,210) and to the electrode strips (130) of the second electrodes (240,260), which synthesis means is responsive to control signals (S) for selecting certain ones of the electrode strips (130) of the first and second electrodes to synthesise said electrodes between which variations in mutual capacitances are to be measured by the measuring means (30); and
- control means (50) operatively coupled to the synthesis means (150) for supplying control signals (S) thereto, thereby to specify which of the electrode strips (130) are to constitute the first electrodes and which of the electrode strips (130) are to constitute the second electrodes.

10. Apparatus as claimed in claim 9, wherein said measuring means (30) comprises:

- balance ratio measuring means (560,570) for determining electrical balance ratios from the mutual capacitances among the selected first and second electrode strips (130); and
- means (40) for determining the position of the passive object from the balance ratios.

11. Apparatus as claimed in claim 9 or claim 10, wherein said means (530,540,550) for supplying charges supplies charges to the selected first and second strips and said measuring means further comprises means (560,670,F) for measuring the charge supplied thereby to determine the decrease in mutual capacitances between the selected electrode strips (130).

12. Apparatus as claimed in claim 11, wherein said charge supplying means further includes means for supplying electrical charges to selected pairs of first and second electrodes defining two halves of a first dipole electrode, and to selected pairs of first and second electrodes defining two halves of a second dipole electrode, such that electric fields are established between the pairs of electrodes forming the dipole electrodes.

13. Apparatus as claimed in any of the preceding claims, wherein the first and second electrodes (160,170; 200,210,240,260) are arranged in the form of a pad (20) towards which said object (60) may be moved or on to which said object may be touched in either case so as to perturb the mutual capacitances.

14. A method of measuring an object's position using apparatus as claimed in claim 9 or any claim appendant thereto, which method comprises:-

- controlling the synthesis means (150) repeatedly to synthesise the first and second electrodes (160,170; 200,210,240,260) by selecting suitable electrode strips (130), the electrical field between the first and second electrodes being distorted by the presence of the object (60);

- measuring the decrease in the mutual capacitance between the first and second electrodes (160,170; 200,210,240,260);
- calculating a coarse position for the object (60) based on at least one target index (IT, JT), said target index reflecting the position of the first or second electrodes;
- calculating a fine position for the object (60) based on the measured decrease in the mutual capacitances between the first and second electrodes; and
- calculating (760, 830) the net position of the object based on the object's calculated coarse and fine positions.

15. A method as claimed in claim 16, wherein the calculation of the object's net position is found by summing the object's coarse position and the object's fine position.

16. A method as claimed in claim 14 or claim 15, further comprising the step of updating the target index.

17. A method as claimed in any of claims 14 to 16, wherein the step of calculating the object's fine position further comprises:

- calculating (700, 710) a first electrical balance between a first electrode (160; 200,210) defined by selected first electrode strips (130) and a second electrode (170; 240,260) defined by selected second electrode strips 130), the selected first and second electrodes strips (130) being determined by the target index;
- calculating (720, 730) a second electrical balance between a further first electrode defined by further selected first electrode strips (130) and a second electrode defined by second electrode strips (130), the further first electrode being determined by a target index offset;
- calculating (740) an electrical balance ratio between the first and second electrical balances; and
- calculating (760) the object's fine position based on said electrical balance ratio and the distance ($X_p$) between the selected electrode strips.

18. A method as claimed in claim 17, wherein the steps of calculating the first and second electrical balances includes the measurement of the decrease in the mutual capacitances between the first and second electrodes and algebraically summing the measured decreases in capacitance values between the electrodes.

19. A method as claimed in claim 18, wherein the electrical balance ratio follows the relationship:-

$$Q = \frac{L_1}{L_1 - L_N}$$

where

$Q$ = electrical balance ratio
$L_1$ = the first electrical balance, and
$L_N$ = the second electrical balance

20. The method as claimed in claim 19, wherein the object's fine position is calculated according to the following relationship:

$$Fine\ position = (X_N - X) * Q$$

where

$X$ = a location of the first electrode, and
$X_N$ = a location of the further first electrode.

**Patentansprüche**

1. Vorrichtung zum Bestimmen der Position von einem konduktiven passiven Gegenstand (60), wie einem Finger von einer Person, einer Hand oder einem konduktiven Gegenstand, der in der Hand der Person gehalten wird, wobei die Vorrichtung eine Vielzahl von voneinander beabstandeten Elektroden, die so angeordnet sind, daß dazwischen Gegenkapazitäten vorhanden sind, eine Einrichtung (30) zum Messen von Veränderungen der Gegenkapazitäten und eine Einrichtung (40) aufweist, die auf die Meßeinrichtung anspricht, um die Position des Gegenstandes (60) relativ zu den Elektroden zu bestimmen;

dadurch gekennzeichnet, daß

- die Elektroden zumindest eine erste streifenähnliche Elektrode (160; 200, 210) und zumindest eine zweite streifenähnliche Elektrode (170; 240, 260) beinhalten, die in der Nähe zu der ersten Elektrode (160; 200, 210) angeordnet ist, um darüber zu kreuzen und einen Überkreuzungsbereich (430) zu bilden;
- die Meßeinrichtung eine Einrichtung (530, 540, 550) aufweist, um der zumindest einen ersten Elektrode (160; 200, 210) und der zumindest einen zweiten Elektrode (170; 240, 260) elektrische Ladungen zuzuführen, um dadurch elektrische Felder zu erzeugen, so daß eine Gegenkapazität zwischen den ersten und den zweiten Elektroden vorhanden ist, wobei die Gegenkapazität abnimmt, wenn sich der Gegenstand in der Nähe des Überkreuzungsbereichs befindet, und das Ausmaß dieser Abnahme von der relativen Position des Gegenstandes (60) bezüglich des Überkreuzungsbereichs abhängt;
- die Meßeinrichtung (30) dazu ausgestaltet ist, um die Abnahme der Gegenkapazitäten zwischen den ersten und zweiten Elektroden (160, 170; 200, 210, 240, 260) zu messen; und
- die Einrichtung (40), die auf die Meßeinrichtung (30) anspricht, dazu ausgestaltet, um die Position des Gegenstandes (60) relativ zu dem Überkreuzungsbereich zu bestimmen.

2. Vorrichtung nach Anspruch 1, bei der die Elektroden (160, 170; 200, 210, 240, 260) länglich und wesentlich länger als die Länge oder Breite des Überkreuzungsbereichs sind.

3. Vorrichtung nach Anspruch 1 oder Anspruch 2, außerdem mit einer Vielzahl von voneinander beabstandeten zweiten Elektroden (240, 260), die in der Nähe der ersten Elektrode (160) angeordnet sind, um darüber zu kreuzen und definieren:

- eine Vielzahl von Überkreuzungsbereichen, so daß Gegenkapazitäten zwischen der ersten Elektrode und jeder der zweiten Elektroden vorhanden sind;
- wobei die Meßeinrichtung (30) die Abnahme der Gegenkapazitäten zwischen der ersten Elektrode und jeder der zweiten Elektroden mißt; und
- wobei die Einrichtung (40), die auf die Meßeinrichtung anspricht, die Position des Gegenstandes (60) relativ zu den Überkreuzungsbereichen bestimmt.

4. Vorrichtung nach Anspruch 3, bei der die zweiten Elektroden (240, 260) allgemein parallel zueinander und allgemein in rechten Winkeln bezüglich der ersten Elektrode angeordnet sind.

5. Vorrichtung nach Anspruch 3, außerdem mit:

- einer Vielzahl von voneinander beabstandeten ersten Elektroden (200, 210), die benachbart zu den zweiten Elektroden (240, 260) angeordnet sind, um darunter zu kreuzen und einen Überkreuzungsbereich an jeder Stelle zu definieren, an der eine der zweiten Elektroden eine der ersten Elektroden überkreuzt, so daß Gegenkapazitäten zwischen jeder der ersten Elektroden und jeder der zweiten Elektroden vorhanden sind;
- wobei die Meßeinrichtung (30) die Abnahme der Gegenkapazitäten zwischen den ersten Elektroden und den zweiten Elektroden mißt; und
- wobei die Einrichtung (40), die auf die Meßeinrichtung anspricht, die Position des Gegenstandes (60) relativ zu den Überkreuzungsbereichen bestimmt.

6. Vorrichtung nach Anspruch 5, bei der die ersten Elektroden (200, 210) allgemein parallel zueinander angeordnet sind, die zweiten Elektroden (240, 260) allgemein parallel zueinander angeordnet sind, und sich die ersten und zweiten Elektroden allgemein in rechten Winkeln überkreuzen.

7. Vorrichtung nach Anspruch 5 oder nach Anspruch 6, außerdem mit einer Isolatoreinrichtung (370), die zwischen der oder jeder ersten Elektrode und der oder jeder zweiten Elektrode angeordnet ist.

8. Vorrichtung nach einem der Ansprüche 5 bis 7, bei der jede der ersten und zweiten Elektroden (200, 210, 240, 260) eine Vielzahl von Elektrodenstreifen (130) enthält, die funktional miteinander verbunden sind.

9. Vorrichtung nach Anspruch 8, außerdem mit:

   - einer Syntheseeinrichtung (150), die funktional mit den Elektrodenstreifen (130) der ersten Elektroden (200, 210) und mit den Elektrodenstreifen (130) der zweiten Elektroden (240, 260) verbunden ist, wobei die Syntheseeinrichtung auf Steuersignale (S) anspricht, um bestimmte der Elektrodenstreifen (130) der ersten und zweiten Elektroden auszuwählen, um die Elektroden zu synthetisieren, zwischen denen Veränderungen bezüglich der Gegenkapazitäten durch die Meß-einrichtung (30) zu messen sind; und
   - einer Steuereinrichtung (50), die funktional mit der Syntheseeinrichtung (150) gekoppelt ist, um dieser Steuersignale (S) zuzuführen, um dadurch zu spezifizieren, welche der Elektrodenstreifen (130) die ersten Elektroden ausmachen und welche der Elektrodenstreifen (130) die zweiten Elektroden ausmachen.

10. Vorrichtung nach Anspruch 9, bei der die Meßeinrichtung (30) aufweist:

   - eine Gleichgewichtsverhältnismeßeinrichtung (560, 570) zum Bestimmen der elektrischen Gleichgewichtsverhältnisse aus den gegenseitigen Kapazitäten unter den ausgewählten ersten und zweiten Elektrodenstreifen (130); und
   - eine Einrichtung (40) zum Bestimmen der Position des passiven Gegenstandes aus den Gleichgewichtsverhältnissen.

11. Vorrichtung nach Anspruch 9 oder Anspruch 10, bei der die Einrichtung (530, 540, 550) zum Zuführen von Ladungen zu den ausgewählten ersten und zweiten Streifen Ladungen zuführt, und die Meßeinrichtung außerdem eine Einrichtung (560, 670, F) aufweist, um die zugeführte Ladung zu messen, um dadurch die Abnahme der Gegenkapazitäten zwischen den ausgewählten Elektrodenstreifen (130) zu bestimmen.

12. Vorrichtung nach Anspruch 11, bei der die Ladungszuführeinrichtung außerdem eine Einrichtung aufweist, um elektrische Ladungen ausgewählten Paaren von ersten und zweiten Elektroden, die zwei Hälften von einer ersten Dipolelektrode definieren, und ausgewählten Paaren von ersten und zweiten Elektroden zuzuführen, die zwei Hälften von einer zweiten Dipolelektrode definieren, so daß elektrische Felder zwischen den Paaren von Elektroden erzeugt werden, die die Dipolelektroden bilden.

13. Vorrichtung nach einem der vorhergehenden Ansprüche, bei der die ersten und zweiten Elektroden (160, 170; 200, 210, 240, 260) in der Form einer Platte (20) angeordnet sind, auf die der Gegenstand (60) zubewegt werden kann oder die der Gegenstand berühren kann, um in jedem Fall die Gegenkapazitäten zu beeinflussen.

14. Verfahren zum Messen einer Position eines Gegenstandes unter Verwendung einer Vorrichtung nach Anspruch 9 oder nach einem von diesem abhängigen Anspruch, wobei das Verfahren umfaßt:

   - wiederholtes Steuern der Syntheseeinrichtung (150), um die ersten und zweiten Elektroden (160, 170; 200, 210, 240, 260) zu synthetisieren, um geeignete Elektrodenstreifen (130) auszuwählen, wobei das elektrische Feld zwischen den ersten und zweiten Elektroden durch das Vorhandensein des Gegenstandes (160) beeinflußt wird;
   - Messen der Abnahme der Gegenkapazität zwischen den ersten und zweiten Elektroden (160, 170; 200, 210, 240, 260);
   - Berechnen einer ungefähren Position des Gegenstandes (60) basierend auf zumindest einem Zielindex (IT, JT), wobei der Zielindex die Position der ersten und zweiten Elektroden wiedergibt;
   - Berechnen einer genauen Position des Gegenstandes (60) basierend auf der gemessenen Abnahme der Gegenkapazitäten zwischen den ersten und zweiten Elektroden; und
   - Berechnen (760, 830) der Gesamtposition des Gegenstandes basierend auf der berechneten ungefähren und genauen Position des Gegenstandes.

15. Verfahren nach Anspruch 14, bei dem die Berechnung der Gesamtposition des Gegenstandes durch Addition der ungefähren Position des Gegenstandes und der genauen Position des Gegenstandes gefunden wird.

16. Verfahren nach Anspruch 14 oder Anspruch 15, außerdem mit dem Schritt des Aktualisierens des Zielindex.

17. Verfahren nach einem der Ansprüche 14 bis 16, bei dem der Schritt des Berechnens der genauen Position des Gegenstandes außerdem umfaßt:

- Berechnen (700, 710) eines ersten elektrischen Gleichgewichts zwischen einer ersten Elektrode (160; 200, 210), die durch ausgewählte erste Elektrodenstreifen (130) definiert ist, und einer zweiten Elektrode (170; 240, 260), die durch ausgewählte zweite Elektrodenstreifen (130) definiert ist, wobei die ausgewählten ersten und zweiten Elektrodenstreifen (130) durch den Zielindex bestimmt sind;
- Berechnen (720, 730) eines zweiten elektrischen Gleichgewichts zwischen einer weiteren ersten Elektrode, die durch weitere ausgewählte erste Elektrodenstreifen (130) definiert ist, und einer zweiten Elektrode, die durch zweite Elektrodenstreifen (130) definiert ist, wobei die weitere erste Elektrode durch einen Zielindex-Versatz bestimmt ist;
- Berechnen (740) eines elektrischen Gleichgewichtsverhältnisses zwischen den ersten und zweiten elektrischen Gleichgewichten; und
- Berechnen (760) der genauen Position des Gegenstandes basierend auf dem elektrischen Gleichgewichtsverhältnis und dem Abstand ($X_p$) zwischen den ausgewählten Elektrodenstreifen.

18. Verfahren nach Anspruch 17, bei dem die Schritte des Berechnens des ersten und zweiten elektrischen Gleichgewichts das Messen der Abnahme der Gegenkapazitäten zwischen den ersten und zweiten Elektroden und das algebraische Summieren der gemessenen Abnahmen der Kapazitätswerte zwischen den Elektroden umfaßt.

19. Verfahren nach Anspruch 18, bei dem das elektrische Gleichgewichtsverhältnis der Beziehung folgt:

$$Q = \frac{L_1}{L_1 - L_N}$$

wobei

Q = elektrisches Gleichgewichtsverhältnis,
$L_1$ = das erste elektrische Gleichgewicht und
$L_N$ = das zweite elektrische Gleichgewicht ist.

20. Verfahren nach Anspruch 19, bei dem die genaue Position des Gegenstandes gemäß der folgenden Beziehung berechnet wird:

$$\text{Genaue Position} = (X_N - X) \cdot Q$$

wobei

X = eine Position der ersten Elektrode und
$X_N$ = eine Position der weiteren ersten Elektrode ist.

**Revendications**

1. Dispositif pour déterminer la position d'un objet conducteur passif (60) tel que le doigt d'une personne, la main d'une personne ou un objet conducteur tenu dans la main de la personne, ce dispositif comprenant plusieurs électrodes espacées agencées de façon qu'il y ait des capacités mutuelles entre elles, des moyens (30) pour mesurer des changements dans les capacités mutuelles, et des moyens (40) sensibles aux moyens de mesure pour déterminer la position dudit objet (60) par rapport aux électrodes ;
   caractérisé en ce que :

- les électrodes comprennent au moins une première électrode en forme de bande (160 ; 200, 210) et au moins une seconde électrode en forme de bande (170 ; 240, 260) disposée adjacente à la première électrode (160 ; 200, 210) pour former un croisement sur celle-ci et définir une région de croisement (430) ;
- les moyens de mesure comprennent des moyens (530, 540, 550) pour fournir des charges électriques à l'au moins une première électrode (160 ; 200, 210) et à l'au moins une seconde électrode (170 ; 240, 260) de façon à développer des champs électriques tels qu'une capacité mutuelle est présente entre les première et seconde électrodes, cette capacité mutuelle décroissant lorsque l'objet est positionné à proximité de la région de croisement, et le degré de cette diminution dépendant de la position relative de l'objet (60) par rapport à la région de croisement ;

- les moyens de mesure (30) sont agencés pour mesurer la diminution de capacités mutuelles entre les première et seconde électrodes (160, 170 ; 200, 210, 240, 260) ; et
- les moyens (40) sensibles aux moyens de mesure (30) sont agencés pour déterminer la position de l'objet (60) par rapport à la région de croisement.

2. Dispositif selon la revendication 1, dans lequel les électrodes (160, 170 ; 200, 210, 240, 260) sont allongées et sensiblement plus longues que la longueur ou largeur de la région de croisement.

3. Dispositif selon la revendication 1 ou 2, comprenant en outre plusieurs secondes électrodes espacées (240, 260) disposées adjacentes à la première électrode (160) pour former un croisement sur celle-ci et définir

- plusieurs régions de croisement, de façon que des capacités mutuelles sont présentes entre la première électrode et chacune des secondes électrodes ;
- dispositif dans lequel lesdits moyens de mesure (30) mesurent la diminution de capacités mutuelles entre la première électrode et chacune des secondes électrodes ; et
- dans lequel les moyens (40) sensibles aux moyens de mesure déterminent la position de l'objet (60) par rapport aux régions de croisement.

4. Dispositif selon la revendication 3, dans lequel les secondes électrodes (240, 260) sont agencées de manière générale parallèlement l'une à l'autre, et d'une manière générale à angles droits par rapport à la première électrode.

5. Dispositif selon la revendication 3, comprenant en outre :

- plusieurs premières électrodes espacées (200, 210) disposées adjacentes aux secondes électrodes (240, 260) pour former un croisement sous celles-ci et définir une région de croisement à chaque endroit où l'une des secondes électrodes forme un croisement sur l'une des premières électrodes, de façon que des capacités mutuelles sont présentes entre chacune des premières électrodes et chacune des secondes électrodes ;
- dispositif dans lequel lesdits moyens de mesure (30) mesurent la diminution de capacités mutuelles entre les premières électrodes et les secondes électrodes ; et
- dans lequel les moyens (40) sensibles aux moyens de mesure déterminent la position de l'objet (60) par rapport aux régions de croisement.

6. Dispositif selon la revendication 5, dans lequel les premières électrodes (200, 210) sont agencées d'une manière générale parallèlement l'une à l'autre, les secondes électrodes (240, 260) sont agencées d'une manière générale parallèlement l'une à l'autre, et les premières et secondes électrodes se croisent d'une manière générale à angles droits.

7. Dispositif selon la revendication 5 ou 6, comprenant en outre des moyens isolants (370) disposés entre la ou chaque première électrode et la ou chaque seconde électrode.

8. Appareil selon l'une quelconque des revendications 5 à 7, dans lequel chacune des premières et secondes électrodes (200, 210, 240, 260) comprend plusieurs bandes électrode (130) reliées fonctionnellement ensemble.

9. Dispositif selon la revendication 8, comprenant en outre :

- des moyens de synthèse (150) reliés fonctionnellement aux bandes électrode (130) des premières électrodes (200, 210) et aux bandes électrode (130) des secondes électrodes (240, 260), ces moyens de synthèse étant sensibles à des signaux de commande (S) pour sélectionner certaines des bandes électrode (130) des premières et secondes électrodes pour synthétiser lesdites électrodes entre lesquelles des variations de capacités mutuelles doivent être mesurées par les moyens de mesure (30) ; et
- des moyens de commande (50) reliés fonctionnellement aux moyens de synthèse (150) pour leur fournir des signaux de commande (S), de façon à spécifier lesquelles des bandes électrode (130) doivent constituer les premières électrodes et lesquelles des bandes électrode (130) doivent constituer les secondes électrodes.

10. Dispositif selon la revendication 9, dans lequel les moyens de mesure (30) comprennent :

- des moyens de mesure de rapport d'équilibrage (560, 570) pour déterminer des rapports d'équilibrage électrique à partir des capacités mutuelles parmi les premières et secondes bandes électrode sélectionnées (130) ; et

- des moyens (40) pour déterminer la position de l'objet passif à partir des rapports d'équilibrage.

**11.** Dispositif selon la revendication 9 ou 10, dans lequel lesdits moyens (530, 540, 550) pour fournir des charges fournissent des charges aux premières et secondes bandes sélectionnées et les moyens de mesure comprennent en outre des moyens (560, 670, F) pour mesurer la charge fournie de façon à déterminer la diminution de capacités mutuelles entre les bandes électrodes sélectionnées (130).

**12.** Dispositif selon la revendication 11, dans lequel lesdits moyens pour fournir une charge comprennent en outre des moyens pour fournir des charges électriques à des paires sélectionnées de premières et secondes électrodes définissant deux moitiés d'une première électrode dipôle, et à des paires sélectionnées de premières et secondes électrodes définissant deux moitiés d'une seconde électrode dipôle, de façon que des champs électriques sont établis entre les paires d'électrodes formant les électrodes dipôle.

**13.** Dispositif selon l'une quelconque des revendications précédentes, dans lequel les premières et secondes électrodes (160, 170 ; 200, 210, 240, 260) sont agencées sous la forme d'une plaquette (20) vers laquelle ledit objet (60) peut être déplacé ou sur laquelle ledit objet peut toucher, dans l'un ou l'autre cas de façon à perturber les capacités mutuelles.

**14.** Procédé pour mesurer la position d'un objet en utilisant un appareil selon la revendication 9 ou toute revendication rattachée à celle-ci, le procédé comprenant :

- commander les moyens de synthèse (150) répétitivement pour synthétiser les premières et secondes électrodes (160, 170 ; 200, 210, 240, 260) en sélectionnant des bandes électrode convenables (130), le champ électrique entre les premières et secondes électrodes étant distordu par la présence de l'objet (60) ;
- mesurer la diminution de capacité mutuelle entre les premières et secondes électrodes (160, 170 ; 200, 210, 240, 260) ;
- calculer une position grossière de l'objet (60) sur la base d'au moins un index cible (IT,JT), cet index cible reflétant la position des premières et secondes électrodes ;
- calculer une position fine de l'objet (60) en se basant sur la diminution mesurée de capacités mutuelles entre les premières et secondes électrodes ; et
- calculer (760, 830) la position nette de l'objet sur la base des positions grossière et fine calculées pour l'objet.

**15.** Procédé selon la revendication 14, dans lequel le calcul de la position nette de l'objet est obtenu en sommant la position grossière de l'objet et la position fine de l'objet.

**16.** Procédé selon la revendication 14 ou 15, comprenant en outre l'étape d'actualiser l'index cible.

**17.** Procédé selon l'une quelconque des revendications 14 à 16, dans lequel l'étape consistant à calculer la position fine de l'objet comprend en outre :

- calculer (700, 710) un premier équilibre électrique entre une première électrode (160 ; 200, 210) définie par des premières bandes électrode sélectionnées (130) et une seconde électrode (170; 240, 260) définie par des secondes bandes électrode sélectionnées (130), les premières et secondes bandes électrode sélectionnées (130) étant définies par l'index cible ;
- calculer (720, 730) un second équilibre électrique entre une autre première électrode définie par d'autres premières bandes électrode sélectionnées (130) et une seconde électrode définie par des secondes bandes électrode (130), l'autre première électrode étant déterminée par un décalage de l'index cible ;
- calculer (740) un rapport d'équilibre électrique entre les premier et second équilibres électriques ; et
- calculer (760) la position fine de l'objet sur la base dudit rapport d'équilibre électrique et de la distance ($X_P$) entre les bandes électrode sélectionnées.

**18.** Procédé selon la revendication 17, dans lequel les étapes consistant à calculer les premier et second équilibres électriques comprennent la mesure de la diminution de capacités mutuelles entre les première et seconde électrodes et sommer algébriquement les diminutions mesurées de valeurs de capacité entre les électrodes.

**19.** Procédé selon la revendication 18, dans lequel le rapport d'équilibre électrique suit la relation

$$Q = \frac{L_1}{L_1 - L_N}$$

dans laquelle

$Q$ = rapport d'équilibre électrique
$L_1$ = le premier équilibre électrique, et
$L_N$ = le second équilibre électrique.

20. Procédé selon la revendication 19, dans lequel la position fine de l'objet est calculée d'après la relation suivante :

$$Position\ fine = (X_N - X) \cdot Q$$

dans laquelle

$X$ = une position de la première électrode, et
$X_N$ = une position de l'autre première électrode.

EP 0 814 423 B1

_**Fig. 1**_

_**Fig. 2**_

21

150

140

120

130 130

*Fig. 3*

270

260

190

160

240

250

180

230

210

160

220

170

170

200

X[i]

*Fig. 4*

Z

X

Y

80

_Fig.5(a)_    _Fig.5(b)_

_Fig.6_

*Fig. 7*

_Fig. 8(a)_

_Fig. 8(b)_

_Fig. 9_

$(X = X[i])$

AREA A

AREA = A

260

240

D

Z  10(b)

10(b)

10(b)

X

Y

AREA = A
430

210

200

_Fig. 10(a)_

Z

XF

60

X

20

440

240

210

200

440

X[i] — 450

_Fig. 10(b)_

_Fig. 11_

_Fig. 12_

EP 0 814 423 B1

C [i + 1] — 590

SENSED OBJECT
POSITION

R [j]

595

580 — C [i]

x[i] < xF < x[i + 1]

*Fig. 13*

_Fig. 14_

_Fig. 15_

CONTROL ALGORITHM

DETERMINE W — 600

DETERMINE X — 610

DETERMINE Y — 620

UPDATE X INDICES — 630

UPDATE Y INDICES — 640

(OPTIONALLY) FILTER W, X AND Y — 650

SIGNAL P TO UTILIZATION MEANS — 660

*Fig.16*

DETERMINE W

SELECT C[IB] AND R[JB] — 670

$L = L(C[IB], R[JB])$ — 680

$W = LNOM - L$ — 690

DONE

*Fig.17*

DETERMINE X

SELECT C[IT] AND R[JB] — 700

$L = (C[IT], R[JB])$ — 710

SELECT C[IT+n] AND R[JB] — 720

$Ln = L(C[IT+n], R[JB])$ — 730

$Qx = L/(L-Ln)$ — 740

IF $Qx < 0$, $Qx = 0$
IF $Qx > 1$, $Qx = 1$ — 750

$X = x|IT| + Qx * XD$ — 760

DONE

_**Fig. 18**_

DETERMINE Y

SELECT C[IB] AND R[JT] — 770

$L = L(C[IB], R[JT])$ — 780

SELECT C[IB] AND R[JT+n] — 790

$Ln = L(C[IB], R[JT+1])$ — 800

$Qy = L/(L-Ln)$ — 810

IF $Qy < 0$, $Qy = 0$
IF $Qy > 1$, $Qy = 1$ — 820

$Y = y|JT| + Qy * YD$ — 830

DONE

_**Fig. 19**_

32

UPDATE X INDICES

*Fig. 20*

840 — IF $Q_x = 0$, $IT = (IT - 1) \mid M$

850 — IF $Q_x = 1$, $IT = (IT + 1) \mid M$

860 — $IB = [(INTEGER)(IT + 1/2 + n/2 + M/4)] \mid M$

DONE

UPDATE Y INDICES

*Fig. 21*

870 — IF $Q_y = 0$, $JT = (JT - 1) \mid N$

880 — IF $Q_y = 1$, $JT = (JT + 1) \mid N$

890 — $JB = [(INTEGER)(JT + 1/2 + n/2 + N/4)] \mid N$

DONE